# EUROPEAN PATENT APPLICATION

(11) **EP 0 992 276 A1**
(43) Date of publication of application: **12.04.2000**
(21) Application number: 99119026.5
(22) Date of filing: 29.09.1999
(51) Int. Cl.: B01D 53/94, B01J 37/02, B01J 23/63, F01N 3/10

(54) **Exhaust gas purifying catalyst**

(30) Priority: 29.09.1998 JP 27506998
(71) Applicant: Mazda Motor Corporation, Aki-gun, Hiroshima-ken 730-8670 (JP)
(72) Inventor: Koda, Yuki, Aki-gun, Hiroshima (JP); Sumida, Hirosuke, Aki-gun, Hiroshima (JP); Kyogoku, Makoto, Aki-gun, Hiroshima (JP)
(74) Representative: Müller-Boré & Partner Patentanwälte

(57) **Abstract**

An exhaust gas purifying catalyst includes at least an under catalytic layer disposed on a substrate containing a NOx absorbent which absorbs NOx in exhaust gas under existence of oxygen, releases absorbed NOx when an oxygen concentration of exhaust gas lowers and is restrained from absorbing NOx by sulfur compounds in exhaust gas and an outer oxide layer disposed over the under catalytic layer and containing a Ce-Zr composite oxide.

## Description

The present invention relates to an exhaust gas purifying catalyst for a lean burn gasoline engine and a diesel engine.

It has been known to install a NOx absorbent in an exhaust passage, the NOx absorbent absorbs NOx in the exhaust gas while an air-fuel mixture has an air-to-fuel ratio on a lean side and releases the NOx for deoxidization and purification when the oxygen concentration of the exhaust gas is lowered. Typically this type of NOx absorbent has the property of easily absorbing SOx (sulfur compounds: sulfuric acid ions and sulfurous acid ions are included) rather than NOx in the exhaust gas. In consequence, the NOx absorbent that has been poisoned by SOx (which is hereafter referred to SOx-poisoning) encounters a significant reduction in NOx adsorption performance. With respect to sulfur compounds poisoning of the NOx absorbent, Japanese Unexamined Patent Publication No. 8 - 192051 describes an exhaust gas purifying catalyst that comprises a carrier comprising a composite oxide of Ti and Zr, and a catalytic noble metal and a NOx absorbent which are carried by the composite oxide. This exhaust gas purifying catalyst employs Pt as the catalytic noble metal and at least one selected from a group including alkaline earth metals, alkali metals and rare earth elements as the NOx absorbent. In the exhaust gas purifying catalyst, a Ti-Zr composite oxide easily absorbs SOx, since the NOx absorbent causes a reduction in the probability of contacting to SOx, it is thought that the NOx absorbent is prevented from SOx poisoning. The Ti-Zr composite oxide has a high acidity, so that it is thought that it is advantageous to improving NOx conversion efficiency of the exhaust gas purifying catalyst.

As a result of a study by the inventor of this application, it was revealed that though the Ti-Zr composite oxide absorbs NOx and is, however, hard to absorb SOx, it somewhat weakened its NOx absorption property as well as its SOx absorption property and, in consequence, the NOx absorbent caused not only a reduction in the probability of contacting to SOx but a significantly great reduction in the probability of contacting to NOx, it is thought that the NOx absorbent is prevented from SOx poisoning. That is, even when NOx in the exhaust gas approached the NOx absorbent, the Ti-Zr composite oxide by which NOx absorbent kept the NOx off the NOx absorbent, the NOx was hardly absorbed by the NOx absorbent.

It is therefore an object of the invention to provide an exhaust gas purifying catalyst which does not exhibit the disadvantages of known catalysts as mentioned above. The present invention provides an exhaust gas purifying catalyst which comprises not a catalytic layer whith a NOx absorbent and a high acid material mixed therein but an under catalytic layer disposed on a substrate and containing a NOx absorbent and an outer high acid layer.

The invention further provides an exhaust gas purifying catalyst comprising an under catalytic layer disposed on a substrate and containing a NOx absorbent and a high acid outer oxide layer in which SOx is prevented from reaching the NOx absorbent in the under catalytic layer by the high acid outer layer and NOx is absorbed by the NOx absorbent without blocking by the high acid layer when NOx reaches the under catalytic layer so as to cause SOx escape easily from the under catalytic layer.

According to an aspect of the present invention, the exhaust gas purifying catalyst comprises a catalytic layer disposed on a substrate and containing a NOx absorbent which absorbs NOx in exhaust gas under existence of oxygen, releases the absorbed NOx when an oxygen concentration of exhaust gas lowers and is restrained from absorbing NOx by sulfur compounds in exhaust gas, and an oxide layer disposed over the under catalytic layer and containing a Ce-Zr composite oxide.

The Ce-Zr composite oxide is one of oxides which have an ionic electric field strength of approximately 0.7 e·Å⁻² (where e = 1.6021892 x 10⁻¹¹ (C·m⁻² )). Sulfur oxides (SOx) in exhaust gas are, on the one hand, easily absorbed by compounds having high basicity and, on the other hand, hardly absorbed by oxides having high acidity. Therefore, sulfur oxides in exhaust gas are diffused only a little in quantity in the under catalytic layer due to blocking by the Ce-Zr composite oxide containing oxide layer, so as to prevent poisoning the NOx absorbent in the under catalytic layer. In consequence, the sulfur concentration becomes lower in the under catalytic layer than in the outer oxide layer. While NOx in exhaust gas diffuse in and penetrate through the outer oxide layer and are absorbed by the NOx absorbent in the under catalytic layer, the Ce-Zr composite oxide in the oxide layer is considered to somewhat block diffusion and penetration of NOx and, however, does not prevent the penetrated NOx from being absorbed by the NOx absorbent. Further, while the NOx absorbent in the under catalytic layer is somewhat poisoned by sulfur oxides penetrating the outer oxide layer, since sulfur oxides which are released from the NOx absorbent when the oxygen concentration around the NOx absorbent lowers are capable of penetrating through and escaping from the outer oxide layer, the sulfur oxides are less accumulated in the under catalytic layer.

According to another aspect of the invention, the exhaust gas purifying catalyst comprises an under catalytic layer, disposed on a substrate, which has a NOx reducing catalyst for deoxidizing and reducing NOx in exhaust gas, a NOx absorbent for absorbing NOx in exhaust gas under existence of oxygen, releasing the absorbed NOx when the oxygen concentration of exhaust gas lowers, and restrained from absorbing NOx by sulfur compounds in exhaust gas, and a promotor or auxiliary catalyst for absorbing oxygen in exhaust gas and releasing the oxygen when the oxygen concentration in exhaust gas lowers, and an outer oxide layer, disposed over the under catalytic layer, which contains a Ce-Zr composite oxide higher in acidity than the auxiliary catalyst.

The acidity difference such that the auxiliary catalyst in the under catalytic layer is lower in acidity than the Ce-Zr composite oxide in the outer oxide layer provides a tendency to distribute sulfur more densely in the outer oxide layer than in the under catalytic layer, so as to more effectively prevent sulfur poisoning of the NOx absorbent. While the NOx absorbent somewhat lowers its NOx absorbing performance if the auxiliary catalyst in the under catalytic layer attains acidity as high as the outer oxide layer, the auxiliary catalyst having low acidity acts profitably on the NOx absorbing performance of the NOx absorbent.

The auxiliary catalyst preferably comprises one of ceria, CE-Zr composite oxides and composite oxides of Ce, Ti and other metals.

The exhaust gas purifying catalyst may further comprise an in-between layer disposed between the under catalytic layer and the outer oxide layer for activating NOx. The in-between layer separates the under catalytic layer and the outer oxide layer from each other to prevent the outer oxide layer from blocking NOx absorption by the NOx absorbent in the under catalytic layer. Further, the in-between layer activates NOx, so as to profitably act on the NOx absorbing performance of the NOx absorbent.

As the auxiliary catalyst, while it is advantageous to employ ceria in the viewpoint of oxygen absorption performance, nevertheless, a Ce-Zr composite oxide, which has high heat-resistance, is preferably employable in the light of that the exhaust gas purifying catalyst is exposed to exhaust gas at significantly high temperatures.

A noble metal may be contained as a catalytic metal in the NOx reducing catalyst. As noble metals have catalytic activity to NOx deoxidization and reduction from a relatively low temperature, the exhaust gas purifying catalyst profitably acts on NOx purification.

The NOx absorbent preferably comprises at least one selected from a group including alkaline earth metals, alkali metals and rare earth elements for the reason that these metals and elements have high basicity and are, in consequence, advantageous to NOx absorption. Ba may be most preferably employable. Further, the NOx absorbent may be preferable to be lower in acidity than the Ce-Zr composite oxide because NOx is apt to be adsorbed by high acid materials.

The exhaust gas purifying catalyst comprising an under catalytic layer containing a NOx absorbent and an outer oxide layer containing a Ce-Zr composite oxide in accordance with a preferred embodiment prevents the NOx absorbent in the under catalytic layer from sulfur poisoning without a significant loss of NOx absorption performance.

The exhaust gas purifying catalyst comprising an under catalytic layer containing a NOx reduction catalyst, a NOx absorbent and an auxiliary oxygen absorption catalyst and an outer oxide layer containing a Ce-Zr composite oxide higher in acidity than the auxiliary oxygen absorption catalyst in accordance with a preferred embodiment causes the state in which the sulfur concentration in exhaust gas easily becomes lower in the under catalytic layer than in the outer oxide layer, which is advantageous to prevention of sulfur poisoning of the NOx adsorbent and improvement of NOx absorption performance.

The incorporation of an in-between layer for activating NOx prevents the oxide layer from blocking NOx absorption of the NOx absorbent and beneficially acts on NOx absorption of the NOx absorbent.

The foregoing and other objects and features of the present invention will be clearly understood from the following detailed description with respect to the preferred embodiment thereof when reading in conjunction with the accompanying drawings, in which:
Figure 1 is a schematic cross-sectional view of an exhaust gas purifying catalyst of the invention;
Figure 2 is a graphical diagram showing the relationship between Zr molar fraction of a Ce-Zr composite oxide and ionic electric field strength; and
Figure 3 is a graphical diagram showing NOx conversion efficiency of an example exhaust gas purifying catalyst of the invention and a comparative exhaust gas purifying catalyst.

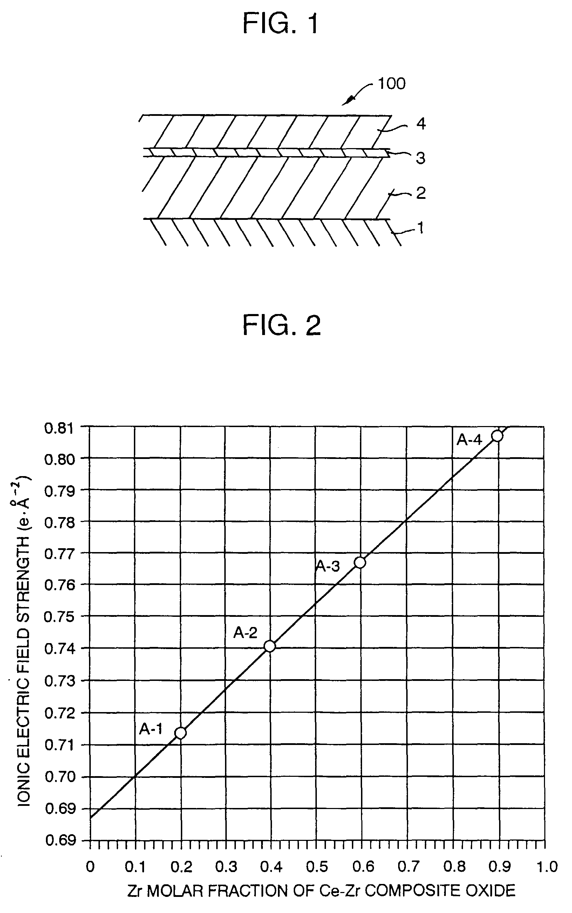

Referring to the drawings in detail and, in particular, to Figure 1, there is shown a layer structure of an exhaust gas purifying catalyst 100 for a vehicle of the type which alters an air-fuel mixture between a lean side on which an excess air ratio λ is greater than one (1) and a rich side on which the excess air ratio λ is equal to or smaller than one (1) in accordance with engine operating conditions. On the lean side, the air-to-fuel ratio is between 22 and 100 and the oxygen concentration of the exhaust gas is higher than 5 %. The exhaust gas purifying catalyst 100 comprises three catalytic layers, namely an under catalytic layer 2, an in-between catalytic layer 3 and an outer catalytic layer 4, i.e. an oxide layer, supported on a substrate 1. The substrate 1 is of a monolith type of cordierite honeycomb bed which has two cells per inch and six mil thickness wall between each adjacent cells. The under catalytic layer 2 contains a NOx absorbent and, more specifically, comprises Pt as a catalytic metal, Ba as a NOx absorbent, alumina as a carrier or support base material for carrying the Pt and Ba thereon, a Ce-Zr composite oxide as a promotor or auxiliary catalyst for absorbing oxygen and a hydration alumina binder. The in-between catalytic layer 3 comprises Pt and Rh as catalytic metals, zeolite as a carrier or support base material for carrying the Pt and Rh thereon and a hydration alumina binder. The outer catalytic layer 4 comprises a Ce-Zr composite oxide and a hydration alumina binder. Each of the in-between and outer catalytic layers contains Pt as a part of catalytic metal and Ba as a part of NOx absorbent. The Ce-Zr composite oxide is different in Zr concentration between the under catalytic layer 2 and the outer catalytic layer 4 and, more specifically, higher in the outer catalytic layer 4 than in the under catalytic layer 2. In consequence, the acidity of Ce-Zr composite oxide is higher in the outer catalytic layer 4 than in the under catalytic layer 2.

An example exhaust gas purifying catalyst was prepared in the following process.

A slurry was prepared by adding nitric acid to a mixture of alumina, a Ce-Zr composite oxide and hydrate alumina mixed at a weight ratio of 46.5 : 46.5 : 7. The nitric acid was added in order to adjust the potential of hydrogen (pH) of the mixture slurry between approximately 3.5 and 4. A honeycomb substrate 1 was dipped in the mixture slurry and then pulled out from the mixture slurry. After blowing off an excess of the mixture slurry from the honeycomb substrate 1 with air, the mixture slurry remaining applied on the honeycomb substrate 1 was dried at 150°C for two hours and sintered at 500°C for two hours so as thereby to be formed as an under catalytic layer 2. Through the process, the total weight of alumina, Ce-Zr composite oxide and binder was adjusted to 320 g/L which corresponded to 80 weight % of the honeycomb substrate 1. In the specification, the unit g/L is referred to the weight per one liter of the honeycomb substrate 1. As the Ce-Zr composite oxide, Ce_{0.6}Zr_{0.4}O₂, which had a Zr molar fraction i.e. Zr/(Ce + Zr), of 0.4, was employed. The Ce-Zr composite oxide having a Zr molar fraction is hereafter referred to as an A-2 Ce-Zr composite oxide. A slurry was prepared by adding water and a zeolite (MFI) powder to a mixture of dinitro-diamine platinum solution and rhodium nitrate solution mixed so as to contain Pt and Rh at a weight ratio of 75 : 1. The total weight of Pt and Rh was adjusted to 24 g per 1 Kg zeolite. After drying the mixture slurry by a spray dryer, the mixture slurry was sintered at 500°C for two hours to provide a Pt-Rh carrying zeolite powder. A slurry was prepared by adding water to the Pt-Rh carrying zeolite powder and hydrate alumina at a weight ratio of 85 : 15. The honeycomb substrate 1 formed with the under catalytic layer 2 was dipped in this mixture slurry and then pulled out from the mixture slurry. After blowing off an excess of the mixture slurry from the honeycomb substrate 1 with air, the mixture slurry remaining applied on the honeycomb substrate 1 was dried at 150°C for two hours and sintered at 500°C for two hours so as thereby to be formed as an in-between catalytic layer 3 over the under catalytic layer 2. Through the process, the total weight of Pt and Rh carried on the zeolite was adjusted to 20 g/L which corresponded to 5 weight % of the honeycomb substrate 1. A slurry was prepared by adding water to a mixture of a Ce-Zr composite oxide and hydrate alumina at a weight ratio of 10 : 1. As the Ce-Zr composite oxide, Ce_{0.4}Zr_{0.6}O₂ whose Zr molar fraction was 0.6, was employed. The Ce-Zr composite oxide having a Zr molar fraction of 0.6 is referred to as an A-3 Ce-Zr composite oxide. The honeycomb substrate 1 formed with the under and in-between catalytic layers 2 and 3 was dipped in this mixture slurry and then pulled out from the mixture slurry. After blowing off an excess of the mixture slurry from the honeycomb substrate 1 with air, the mixture slurry remaining applied on the honeycomb substrate 1 was dried at 150°C for two hours and sintered at 500°C for two hours so as thereby to be formed as an outer catalytic layer 4 over the in-between catalytic layer 3. Through the process, the total weight of ceria was adjusted to 100 g/L which corresponded to 25 weight % of the honeycomb substrate 1. The honeycomb substrate 1, on which the multiple catalytic layer, i.e. the under, in-between and outer catalytic layers 2, 3 and 4, was formed, was dipped in a mixture of a dinitro-diamine platinum solution and a barium acetate solution so as to be impregnated with 6 g/L Pt and 30 g/L Ba and then dried at 150°C for two hours and sintered at 500°C for two hours.

In order to assess NOx conversion efficiency and anti-SOx poisoning property of the exhaust gas purifying catalyst as an example of the invention, a comparative sample exhaust gas purifying catalyst was prepared by simply replacing the A-3 Ce-Zr composite oxide with a Ce-Zr composite oxide having a Zr molar fraction of 0.2, i.e. Ce_{0.8}Zr_{0.2}O₂ (which is hereafter referred to an A-1 Ce-Zr composite oxide) or a Ce-Zr composite oxide having a Zr molar fraction of 0.9, i.e. Ce_{0.1}Zr_{0.9}O₂ (which is hereafter referred to an A-4 Ce-Zr composite oxide) in the exhaust gas purifying catalyst described above.

Impurities content of each of the example exhaust gas purifying catalyst according to the above embodiment and the comparative exhaust gas purifying catalyst was less than one weight %. The relationship between Zr molar fraction and ionic electric field strength for the A-1, A-2, A-3 and A-4 Ce-Zr composite oxides is shown in Figure 2.

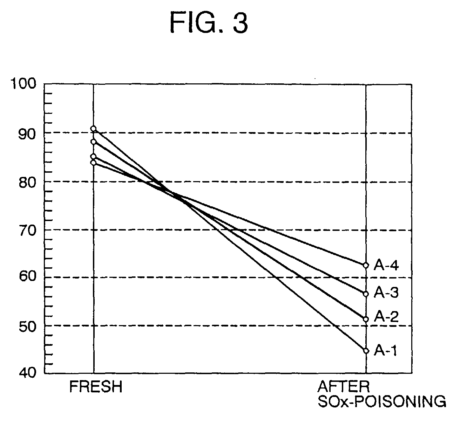

Measurements of NOx conversion efficiency were performed by exposing the example exhaust gas purifying catalyst and the comparative exhaust gas purifying catalyst to simulated exhaust gas flowing at 150°C at a space velocity SV of 55000 h⁻¹ through a fluidized bed. Specifically, the simulated exhaust gas, which is specified in a table below, was altered in composition to a λ = 1 state (which refers to the state of exhaust gas discharged when an air-fuel mixture of an excess air ratio λ of 1 is burnt) from a lean state (which refers to the state of exhaust gas discharged when a lean air-fuel mixture is burnt) once, kept in the λ = 1 state for a specified period of time and thereafter returned to the lean state. The measurement was made to find NOx conversion efficiency for 130 seconds since the alteration to the lean state of the simulated exhaust gas. The result is shown as fresh NOx conversion efficiency in Figure 3.

### Simulated Exhaust Gas Composition

| Component | λ = 1 State | Lean State |
|---|---|---|
| HC(Propylene) | 4000 ppmC | 4000 ppmC |
| CO | 0.16 % | 0.16 % |
| NOx | 260 ppm | 260 ppm |
| H₂ | 650 ppm | 650 ppm |
| CO₂ | 9.75 % | 9.75 % |
| O₂ | 0.5 % | 7 % |
| N₂ | Remainder | Remainder |

Further in order to assess SOx-poisoned NOx conversion efficiency of the exhaust gas purifying catalyst of the invention, after subjecting the example exhaust gas purifying catalyst and the comparative exhaust gas purifying catalyst to SOx-poisoning, measurements of NOx conversion efficiency were made by the same manner as described above. SOx-poisoning was performed by exposing each exhaust gas purifying catalyst to an N₂ gas containing 200 ppm of SO₂ and 20 % of O₂ flowing at 350°C at a space velocity SV of 55000 h⁻¹ through a fluidized bed for 30 minutes. The result is shown as SOx-poisoned NOx conversion efficiency in Figure 3.

As clearly seen in Figure 3, it is recognized that the Ba as the NOx absorbent in the under catalytic layer 2 has been poisoned by SO₂ from the fact that each exhaust gas purifying catalysts shows a significant drop in SOx-poisoned NOx conversion efficiency. However, the example exhaust gas purifying catalyst in which the A-3 Ce-Zr composite oxide or the A-4 Ce-Zr composite oxide, which is higher in acidity than the A-2 Ce-Zr composite oxide, is contained in the outer catalytic layer 4 shows a higher SOx-poisoned NOx conversion efficiency and provides a lower drop ratio of NOx conversion efficiency due to SOx-poisoning than the comparative exhaust gas purifying catalyst in which the A-1 Ce-Zr composite oxide having a low acidity is contained in the outer catalytic layer 4. In consequence, it is concluded that the acidity of the Ce-Zr composite oxide in the outer catalytic layer 4 affects NOx conversion efficiency and the increased acidity of the Ce-Zr composite oxide in the outer catalytic layer 4 works effectively with respect to anti-SOx poisoning property of the exhaust gas purifying catalyst. It is considered to be one of the causes that SO₂ in the exhaust gas is easy to be absorbed by the A-1 Ce-Zr composite oxide which is low in acidity and, however, is hardly absorbed by the A-3 Ce-Zr composite oxide or the A-4 Ce-Zr composite oxide, which is high in acidity. That is, the mechanism is considered to take the process of causing only a small amount of SO₂ to diffuse in the under catalytic layer 2 due to disturbance by the outer catalytic layer 4, so as to prevent Ba in the under catalytic layer 2 from SOx-poisoning; causing NOx to pass through the outer catalytic layer, i.e. the oxide layer 4 without disturbance by the outer catalytic layer 4, so as to be absorbed by Ba in the under catalytic layer 2; and permitting SO₂ to break away from Ba and escape through the outer catalytic layer 4, so as to prevent SO₂ from accumulating in the under catalytic layer 2. As a result of practical investigation of the sulfur concentration distribution in the SOx-poisoned exhaust gas purifying catalyst for which the utilization was made of X-ray images, it was found that while the SOx-poisoned example exhaust gas purifying catalyst showed a lower sulfur concentration in the under catalytic layer 2 than in the outer catalytic layer 4, on the contrary, the SOx-poisoned comparative exhaust gas purifying catalyst showed a higher sulfur concentration in the under catalytic layer 2 than in the outer catalytic layer 4. Further, it was found that the Ce-Zr composite oxide was desirable to have a molar fraction between 0.6 and 1.0 and, in particular, between 0.9 and 1.0 in view of refreshing and anti-SOx poisoning.

In the light of the above discussion, it is grasped that making the outer catalytic layer 4 be a layer of the A-3 Ce-Zr composite oxide which is higher in acidity than the A-2 Ce-Zr composite oxide used as a promotor or auxiliary catalyst for oxygen adsorption in the under catalytic layer 2 is effective in improving an anti-SOx poisoning property. NOx that is absorbed by Ba in the under catalytic layer 2 while an air-fuel mixture remains lean (λ > 1) is released when the air-fuel mixture is turned rich (λ ≤ 1). The NOx that is released is deoxidized and reduced by Pt and Rh carried on zeolite in the in-between catalytic layer 3 as well as by Pt carried on alumina in the under catalytic layer 2. The in-between catalytic layer 3 works to activate NOx and promote adsorption of NOx by Ba in the under catalytic layer 2.

Although the present invention has been fully described by way of the preferred embodiments thereof with reference to the accompanying drawings, it is to be noted that various changes and modifications are apparent to those skilled in the art. Therefore, unless otherwise such changes and modifications depart from the true scope of the present invention, they should be construed as included therein.

## Claims

1. An exhaust gas purifying catalyst comprising:
a substrate;
a catalytic layer containing a NOx absorbent which absorbs NOx in exhaust gas under existence of oxygen, releases said NOx when an oxygen concentration of said exhaust gas lowers and is restrained from absorbing NOx by sulfur compounds in said exhaust gas; and
an oxide layer containing a Ce-Zr composite oxide.
wherein said catalytic layer is disposed as an under layer on said substrate and said oxide layer is disposed as an outer layer over said oxide layer.

2. An exhaust gas purifying catalyst as defined in claim 1, and further characterized by:
a NOx reducing catalyst for deoxidization and reducing NOx in exhaust gas and an auxiliary catalyst for promoting oxygen adsorption which absorbs oxygen in said exhaust gas and releases said oxygen when said oxygen concentration lowers, wherein a catalytic layer containing said NOx reducing catalyst, said NOx absorbent and said auxiliary catalyst is disposed on a substrate and an oxide layer containing a Ce-Zr composite oxide which is higher in acidity than said auxiliary catalyst is disposed over said catalytic layer.

3. An exhaust gas purifying catalyst as defined in claim 1 or 2, and further characterized by an in-between layer disposed between said catalytic layer and said oxide layer for activating NOx.

4. An exhaust gas purifying catalyst as defined in one or more of claims 1 to 3, wherein said NOx absorbent is lower in acidity than said Ce-Zr composite oxide.

5. An exhaust gas purifying catalyst as defined in one or more of claims 1 to 4, wherein said NOx reducing catalyst contains a noble metal as a catalytic metal.

6. An exhaust gas purifying catalyst as defined in one or more of claims 1 to 5, wherein said NOx absorbent comprises at least one selected from a group including alkaline earth metals, alkali metals and rare earth elements.
